# EUROPÄISCHE PATENTANMELDUNG

(11) **EP 1 469 052 A1**
(43) Veröffentlichungstag der Anmeldung: **20.10.2004**
(21) Anmeldenummer: 04006284.6
(22) Anmeldetag: 17.03.2004
(51) Int. Cl.: C09J 7/02, C09J 175/08

(54) **Doppelseitiges wiederablösbares Klebeband**

(30) Priorität: 16.04.2003 DE 10317790
(71) Anmelder: tesa AG, 20253 Hamburg (DE)
(72) Erfinder: Schümann, Uwe, Dr., 25421 Pinneberg (DE); Hoppe, Nataly, 22761 Hamburg (DE); Sunarto, Sianty, Singapore 270002 (SG); Hesse, Philippe, 21244 Buchholz (DE); Böhmer, Carsten, 22527 Hamburg (DE)

(57) **Zusammenfassung**

Beidseitig haftklebriges Klebeband mit unterschiedlich stark klebenden Seiten, enthaltend zumindest eine Klebstoffschicht,
dadurch gekennzeichnet, dass
der Haftklebstoff der Klebstoffschicht auf einem chemisch vemetzten Polyurethan basiert, wobei die Ausgangsstoffe des chemisch vemetzten Polyurethans mindestens ein Polypropylenglykol mit einer Molmasse von größer 1000 und einer Funktionalität größer 2,0 enthalten, und zwar zu einem Anteil von mindestens 50 Gew.-% bezogen auf die Gesamtmenge der gegenüber Isocyanaten reaktiven Stoffe, wobei mindestens 80 % der weiteren gegenüber Isocyanaten reaktiven Ausgangsstoffe des chemisch vemetzten Polyurethans eine Molmasse von kleiner oder gleich 1000 und eine nominale Funktionalität von 2,0 haben und wobei sich die Zusammensetzung der Ausgangsstoffe des chemisch vernetzten Polyurethans dadurch auszeichnet, dass das Verhältnis der Anzahl der Isocyanat-Gruppen zur Gesamtanzahl der gegenüber Isocyanaten reaktiven Gruppen zwischen 0,8 und 1,2, bevorzugt zwischen 0,9 und 1,1, besonders bevorzugt zwischen 0,95 und 1,05 liegt.

## Beschreibung

Die Erfindung betrifft ein beidseitig haftklebriges Klebeband mit unterschiedlich stark klebenden Seiten, optional in Form von Stanzlingen oder geschnittenen Formteilen, für das Verkleben sowie rückstands- und beschädigungsfreie Wiederablösen von biegsamen Speichermedien wie zum Beispiel des CD-, CD-ROM- oder DVD-Typs auf planen sowie insbesondere auch auf gekrümmten, gebogenen oder geknickten Oberflächen, im wesentlichen ohne dass es während der Verklebungsdauer zu Ablösungen der biegsamen Speichermedien insbesondere im Kanten- beziehungsweise Randbereich kommt, wobei die Seite, auf die die biegsamen Speichermedien geklebt werden, auf menschlicher Haut im wesentlichen nicht haftet beziehungsweise sich nicht klebrig anfühlt.

Biegsame beziehungsweise flexible optische Speichermedien wie etwa des CD- oder CD-ROM-Typs sind zum Beispiel aus WO 01/52252 A1 bekannt. Derartige Speichermedien bestehen in ihrem Produktaufbau demgemäss aus einer Kunststofffolie, typischerweise aus der Gruppe der Polyester oder Polycarbonate, einer darauf aufgebrachten Sol-Gel-Schicht oder alternativ einer Schicht aus einem Photopolymer, optional einer weiteren Metallisierungsschicht und einer optionalen zusätzlichen Schutzlackschicht. Im Gegensatz zu einer herkömmlichen CD werden die Informationen nicht durch die Kunststofffolie hindurch ausgelesen, sondern von der entgegengesetzten Seite, der entweder offenen, gegebenenfalls metallisierten Sol-Gel-Schicht, alternativ dem Photopolymer oder gegebenenfalls durch die Schutzlackschicht hindurch. Demgemäss ist diese Seite, im folgenden kurz Ausleseseite genannt, besonders vor mechanischen oder sonstigen Beschädigungen zu schützen.

Derartige Speichermedien können sich dank ihrer Biegsamkeit beziehungsweise Flexibilität an die Oberflächen vieler Gegenstände des täglichen Gebrauchs beziehungsweise an deren Verpackungen wie zum Beispiel Dosen, Getränkedosen, Flaschen, Beutel, Tüten, Schachteln, Kartons oder Kisten usw. anpassen, was prinzipiell die Möglichkeit eröffnet, sie zum Beispiel als Informations- und Werbeträger platzsparend und ohne großen Aufwand zu den Zielpersonen zu transportieren.

Für die Befestigung dieser Speichermedien an den Gebrauchsgegenständen beziehungsweise deren Verpackungen kommen prinzipiell doppelseitige Klebebänder oder -folien sowie trägerlos als Film auf antiadhäsiv ausgerüsteten Materialien aufgetragene Haftklebstoffe (sogenannte Transferfixe) in Betracht. Jedoch weisen die bekannten Klebeartikel genannter Art Nachteile auf.

Die meisten üblichen doppelseitigen Klebeartikel kleben auf beiden Seiten gleich stark. Die bekannten Klebeartikel dieses Typus haben den Nachteil, entweder so stark auf der Ausleseseite des biegsamen Speichermediums zu kleben, dass dieses Speichermedium nicht ohne Beschädigung der Ausleseseite vom Klebeartikel abgelöst werden kann, oder so schwach auf den Gebrauchsgegenständen oder deren Verpackungen zu haften, dass keine sichere Fixierung gewährleistet ist.

Doppelseitige Klebeartikel, deren Seiten unterschiedlich stark kleben, sind ebenfalls bekannt, zum Beispiel aus DE 43 16 317 A1. Als Haftklebstoff für die Seite des Klebeartikels, auf der die Ausleseseite des biegsamen Speichermediums geklebt werden soll, können vielfältige bekannte Systeme Verwendung finden, die aber ausnahmslos mit Schwächen behaftet sind.

Haftklebstoffe auf Naturkautschukbasis können so eingestellt werden, dass sie zunächst eine geeignete Klebkraft haben und anfangs auch gut wiederablösbar sind. Diese Haftklebstoffe sind allerdings nicht alterungsstabil. Dies kann schon nach kurzer Zeit zu stark schmierigen oder lackartig verhärteten Rückständen auf den Speichermedien führen.

Haftklebstoffe auf Polyacrylatbasis sind zwar wesentlich alterungsstabiler, jedoch ziehen sie im Regelfall stark auf die Oberflächen der Speichermedien auf. Unter dem Begriff "Aufziehen" versteht der Fachmann die Erhöhung der Verklebungsfestigkeit bei Lagerung des Klebeverbundes. Diese Haftklebstoffe sind somit schwer wiederablösbar und hinterlassen zudem meist Rückstände auf den Oberflächen.
Werden diese Haftklebstoffe chemisch oder durch Strahlen vemetzt, lassen sich die verklebten Speichermedien zwar leichter von ihnen ablösen, jedoch kommt es bei Verklebungen auf gekrümmten Oberflächen insbesondere im Kanten- beziehungsweise Randbereich oft zu unbeabsichtigten Ablösungen der Speichermedien vom Haftklebstoff. Weiterhin führen sowohl vernetzte als auch unvemetzte Polyacrylat-Haftklebstoffe häufig zu irreversiblen, visuell erkennbaren Veränderungen auf der Oberfläche der Ausleseseite des Speichermediums, sogenannten Deformationen.
Beobachtet werden Abdrücke des Klebebandes im Bereich der Kanten und eine Mattierung der Oberfläche der Ausleseseite des Speichermediums, wahrscheinlich hervorgerufen durch die raue Haftklebstoffoberfläche.

Doppelseitige Klebepads, in denen beide Haftklebstoffe auf Polyurethan basieren und jeweils eine unterschiedliche Klebrigkeit aufweisen, sind aus JP 2001 089 720 A1 bekannt. Nachteilig ist die fühlbare Dauerklebrigkeit der beschriebenen Pads, die sich aus der angegebenen Klebkraft von bis zu 3,2 N/cm ergibt. Dadurch würden die Gebrauchsgegenstände nach dem Ablösen der aufgeklebten Speichermedien an den betreffenden Stellen stets in unerwünschter Weise beim Berühren an der Haut festkleben.

Ein doppelseitiges Klebeband zur Schmutzentfernung, in dem einer der beiden Klebstoffe ein abwaschbarer polyurethan-basierter Haftklebstoff ist, ist aus JP 06 279 741 A1 bekannt. Auch hier muss aufgrund der Verwendungsbeschreibung eine fühlbare Dauerklebrigkeit angenommen werden.

Aufgabe der vorliegenden Erfindung ist es somit, ein beidseitig haftklebriges Klebeband zur Verfügung zu stellen, mit dem biegsame beziehungsweise flexible Speichermedien wie zum Beispiel des CD-, CD-ROM- oder DVD-Typs von ihrer Ausleseseite her insbesondere auch auf gekrümmte, gebogene oder geknickte Oberflächen alltäglicher Gebrauchsgegenstände oder deren Verpackungen geklebt und wieder abgelöst werden können, ohne die Speichermedien zu schädigen oder darauf Rückstände zu hinterlassen, und das die geschilderten Nachteile des Standes der Technik nicht oder zumindest nicht in dem Maße zeigt. Insbesondere darf es während der Zeitdauer der Verklebung nicht zu unbeabsichtigten Ablösungen im Kanten- beziehungsweise Randbereich der Verklebungen kommen, weil dann an den betreffenden Stellen die Ausleseseite des Speichermediums nicht mehr hinreichend vor Beschädigungen durch äußere Einflüsse geschützt wäre. Weiterhin soll sich das Klebeband nach dem Ablösen des Speichermediums nicht klebrig anfühlen, weil dies eine Qualitätsbeeinträchtigung für das Produkt, auf das das Klebeband geklebt wurde, darstellen würde.

Gelöst wird diese Aufgabe durch ein beidseitig haftklebriges Klebeband, optional in Form von Stanzlingen oder geschnittenen Formteilen, wie es in den Ansprüchen 1 und 3 niedergelegt ist.
Gegenstand der Unteransprüche sind dabei vorteilhafte Weiterbildungen des Klebebandes, ein Verfahren zu dessen Herstellung sowie Verwendungsmöglichkeiten.

Demgemäss betrifft die Erfindung ein beidseitig haftklebriges Klebeband mit unterschiedlich stark klebenden Seiten, enthaltend zumindest eine Klebstoffschicht, wobei
- der Haftklebstoff der Klebstoffschicht auf einem chemisch vemetzten Polyurethan basiert,
- die Ausgangsstoffe des chemisch vernetzten Polyurethans mindestens ein Polypropylenglykol mit einer Molmasse von größer 1000 und einer Funktionalität größer 2,0 enthalten, und zwar zu einem Anteil von mindestens 50 Gew.-% bezogen auf die Gesamtmenge der gegenüber Isocyanaten reaktiven Stoffe,
- mindestens 80 % der weiteren gegenüber Isocyanaten reaktiven Ausgangsstoffe des chemisch vernetzten Polyurethans eine Molmasse von kleiner oder gleich 1000 und eine nominale Funktionalität von 2,0 haben, und
- sich die Zusammensetzung der Ausgangsstoffe des chemisch vernetzten Polyurethans dadurch auszeichnet, dass das Verhältnis der Anzahl der Isocyanat-Gruppen zur Gesamtanzahl der gegenüber Isocyanaten reaktiven Gruppen zwischen 0,8 und 1,2, bevorzugt zwischen 0,9 und 1,1, besonders bevorzugt zwischen 0,95 und 1,05 liegt, und
Die schwächer klebende Seite des Klebebands haftet erfindungsgemäß auf menschlicher Haut im wesentlichen nicht beziehungsweise fühlt sich nicht klebrig an.

In einer bevorzugten Ausführungsform enthalten die Ausgangsstoffe des chemisch vernetzten Polyurethans mindestens ein Polypropylenglykol mit einer Molmasse von größer 1000 und einer Funktionalität größer 2,0, und zwar zu einem Anteil von mindestens 60 Gew.-%, bevorzugt mindestens 70 Gew.-%, bezogen auf die Gesamtmenge der gegenüber Isocyanaten reaktiven Stoffe.

Die Erfindung betrifft des weiteren ein beidseitig haftklebriges Klebeband mit unterschiedlich stark klebenden Seiten, enthaltend zumindest eine Klebstoffschicht, wobei
- der Haftklebstoff der Klebstoffschicht auf einem chemisch vernetzten Polyurethan basiert, wobei die Ausgangsstoffe des chemisch vernetzten Polyurethans mindestens ein Polypropylenglykol mit einer Molmasse von kleiner oder gleich 1000 und einer Funktionalität größer 2,0 enthalten, dessen Hydroxylgruppen einen Anteil von mindestens 50 % der Gesamtanzahl der gegenüber Isocyanaten reaktiven Gruppen haben,
- mindestens 80 % der weiteren gegenüber Isocyanaten reaktiven Gruppen der Ausgangsstoffe des chemisch vernetzten Polyurethans von Ausgangsstoffen mit einer Molmasse von größer 1000 und einer nominalen Funktionalität von 2,0 getragen werden, und
- sich die Zusammensetzung der Ausgangsstoffe des chemisch vernetzten Polyurethans dadurch auszeichnet, dass das Verhältnis der Anzahl der Isocyanat-Gruppen zur Gesamtanzahl der gegenüber Isocyanaten reaktiven Gruppen zwischen 0,8 und 1,2, bevorzugt zwischen 0,9 und 1,1, besonders bevorzugt zwischen 0,95 und 1,05 liegt und

In einer weiteren bevorzugten Ausführungsform enthalten die Ausgangsstoffe des chemisch vernetzten Polyurethans mindestens ein Polypropylenglykol mit einer Molmasse von kleiner oder gleich 1000 und einer Funktionalität von größer 2,0, dessen Hydroxylgruppen einen Anteil von mindestens 60 %, bevorzugt mindestens 70 % der Gesamtanzahl der gegenüber Isocyanaten reaktiven Gruppen haben.

Erfindungsgemäße doppelseitige Klebebänder bestehen in einer optionalen Ausführungsform aus zwei Klebstoffschichten, einer bekannten, hinsichtlich der Polymerbasis nicht eingeschränkten Haftklebstoffschicht, und einer darauf aufgebrachten erfindungsgemäßen Haftklebstoffschicht auf Basis Polyurethan, wobei die letztgenannte Schicht in jedem Fall eine geringere Klebkraft hat als die erstgenannte.
Ein solches trägerloses Zweischichtlaminat fällt unter die Rubrik der sogenannten Transferfixe, wird durch Aufbringen der Hafklebstoffschichten auf ein antiadhäsiv ausgerüstetes, bahnförmiges Material hergestellt und in dieser Form auch dargereicht beziehungsweise optional in Schneid- oder Stanzprozessen weiterverarbeitet.

In weiteren optionalen Ausführungsformen bestehen erfindungsgemäße Klebebänder aus drei oder mehr Schichten, nämlich einer Trägerschicht, die wiederum ein Laminat aus mehreren Einzelschichten sein kann, und den beiden darauf jeweils von der entgegengesetzten Seite aufgebrachten unterschiedlichen Haftklebstoffschichten.

Um die Verankerung zwischen den einzelnen Schichten zu verbessern, können alle bekannten Methoden der Oberflächenvorbehandlung wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschicht sowohl aus Lösungen oder Dispersionen heraus aufgetragen werden kann als auch im Extrusions- oder Coextrusionsverfahren.

Typische Gesamtproduktdicken betragen 20 µm bis 300 µm, bevorzugt 30 µm bis 200 µm, besonders bevorzugt 40 µm bis 100 µm, ohne die Erfindung mit diesen Angaben einschränken zu wollen.

Als Trägerschichten können alle bekannten, bahnförmigen Folien oder mehrschichtige Folienlaminate eingesetzt werden. Diese können sowohl thermoplastischen als auch duromeren Charakter haben. Beispiele für bevorzugte Trägerfolien sind solche auf Basis PETP, Polyamid, PVC oder Polyolefin, bei letzteren insbesondere PE oder PP. Es können auch Elastomerfolien oder thermoplastische Elastomerfolien eingesetzt werden. Beispiele sind Folien auf Basis Styrolblockcopolymere, Naturkautschuk, Polyisopren, Polybutadien, Polychloropren-Kautschuk, Butylkautschuk, Silikonkautschuk, EPDM-Kautschuk oder Ethylen-Propylen-Copolymere, Polyurethane (wie zum Beispiel A-3600 (Wolff Walsrode), Platilon UO 1 (Atochem), Desmopan (Bayer), Elastollan (Elastogran)), Vinyl-Copolymere, Ethylen-Vinylacetat-Copolymere.
Die Folien können weitere Rezeptierungsbestandteile, wie zum Beispiel Alterungsschutzmittel (Antioxidantien), Lichtschutzmittel, UV-Absorber, Farbpigmente, Farbstoffe, Füllstoffe sowie sonstige Hilfs- und Zusatzstoffe enthalten.
Die Trägerfolien oder einzelne Schichten der Trägerfolien können weiterhin mit einem Gas geschäumt sein oder durch Zugabe von expandierfähigen oder bereits expandierten Mikroballons, Mikroglashohl- und -vollkugeln eine Volumenveränderung erfahren haben.

Ebenfalls als Trägerschichten einsetzbar sind Metallfolien, Gewebe, Vliese, gekreppte oder ungekreppte Papiere sowie Laminate aus den einzelnen Schichten und Folien.

Die Gesamtdicke der eingesetzten Trägerschichten liegt typischerweise zwischen 10 und 100 µm, ohne die Erfindung mit diesen Angaben einschränken zu wollen.

Folgende bekannte Haftklebstoffe können für die stärker klebende Seite des Klebebandes verwendet werden.

Die bekannte Haftklebstoffschicht hat die Aufgabe, auf Oberflächen üblicher Gegenstände des täglichen Gebrauchs beziehungsweise an deren Verpackungen, wie zum Beispiel Dosen, Getränkedosen, Flaschen, Beutel, Tüten, Schachteln, Kartons oder Kisten usw. so gut zu haften, dass keine oder zumindest keine vorzeitige, ungewollte Ablösung des Klebebandes von den Gebrauchsgegenständen oder deren Verpackung stattfindet. Eine solche Aufgabe wird von einer großen Anzahl bekannter Haftklebstoffe beziehungsweise Haftklebstofftypen unterschiedlicher Polymerbasis erfüllt. In Frage kommen beispielsweise Haftklebstoffe auf Basis Polyacrylat, Naturkautschuk, Styrolblockcopolymere, Ethylen-Vinylacetat-Copolymere oder Polyurethan, um nur einige wenige zu nennen. Die in Frage kommenden Haftklebstoffe können vernetzt oder unvernetzt sein. Das Auftragen der Haftklebstoffe kann nach allen bekannten Verfahren erfolgen, also zum Beispiel aus Lösungen oder Dispersionen heraus, im Extrusions- oder Coextrusionsverfahren, durch Walzen- oder Sprühauftrag oder im Reaktivbeschichtungsverfahren.

Bei der Auswahl der Haftklebstoffe ist darauf zu achten, dass Klebfestigkeiten auf den Gebrauchsgegenständen beziehungsweise deren Verpackungen erreicht werden, die eine sichere Fixierung gewährleisten. In Frage kommen im wesentlichen alle Haftklebstoffe, deren Klebkraft, orientierend auf Stahl gemessen (siehe Prüfmethoden), größer ca. 1,0 N/cm, bevorzugt größer 2,0 N/cm, besonders bevorzugt größer 3,0 N/cm ist. In jedem Fall ist die Klebkraft des bekannten Haftklebstoffs, der auf den Oberflächen üblicher Gebrauchsgegenstände beziehungsweise deren Verpackungen haften soll, höher als die des polyurethan-basierten Haftklebstoffs, auf dem die Ausleseseite des Speichermediums haften soll.

Folgende polyurethan-basierte Haftklebstoffe können für die schwächer klebende Seite des Klebebandes verwendet werden.

Erfindungsgemäß einsetzbare Haftklebstoffe auf Basis von Polyurethan werden durch chemische Umsetzung von mindestens einem mindestens difunktionellen Polyisocyanat mit einem oder mehreren gegenüber Isocyanaten reaktiven Ausgangsstoffen, bevorzugt Polyolen, besonders bevorzugt Polyether-Polyolen gebildet, wobei diese Ausgangsstoffe mindestens ein Polypropylenglykol mit einer Molmasse von größer 1000 und mit einer Funktionalität größer 2,0 enthalten, und zwar mit einem Anteil von mindestens 50 Gew.-%, bevorzugt mindestens 60 Gew.-%, besonders bevorzugt mindestens 70 Gew.-%, bezogen auf die Gesamtmenge der gegenüber Isocyanaten reaktiven Stoffe und wobei mindestens 80 % der weiteren gegenüber Isocyanaten reaktiven Ausgangsstoffe eine Molmasse von kleiner oder gleich 1000 und eine nominale Funktionalität von 2,0 haben. In einer weiteren erfindungsgemäßen Ausführungsform enthalten diese Ausgangsstoffe mindestens ein Polypropylenglykol mit einer Molmasse von kleiner oder gleich 1000 und mit einer Funktionalität größer 2,0, dessen Hydroxylgruppen einen Anteil von mindestens 50 %, bevorzugt mindestens 60 %, besonders bevorzugt mindestens 70 % der Gesamtanzahl der gegenüber Isocyanaten reaktiven Gruppen haben, wobei mindestens 80 % der weiteren gegenüber Isocyanaten reaktiven Gruppen von Ausgangsstoffen mit einer Molmasse von größer 1000 und einer nominalen Funktionalität von 2,0 getragen werden.
Die Zusammensetzung der Ausgangsstoffe des chemisch vernetzten Polyurethans ist jeweils dadurch charakterisiert, dass das Verhältnis der Anzahl der Isocyanat-Gruppen zur Gesamtanzahl der gegenüber Isocyanaten reaktiven Gruppen zwischen 0,8 und 1,2, bevorzugt zwischen 0,9 und 1,1, besonders bevorzugt zwischen 0,95 und 1,05 liegt. Die Umsetzung ist also weder signifikant unter- noch überstöchiometrisch.

In einer besonderen Ausführungsform ist der Polyurethan-Haftklebstoff weitgehend lichtstabil. Ein solcher Haftklebstoff wird bevorzugt durch Verwendung aliphatischer oder alicyclischer Diisocyanate erhalten. Besonders geeignet sind aliphatische oder alicyclische Diisocyanate mit unsymmetrischer Molekülstruktur, insbesondere isophorondiisocyanat (IPDI).

Die Klebkraft des polyurethan-basierten Haftklebstoffs für die schwächer klebende Seite des Klebebandes liegt typischerweise zwischen ca. 0,01 und 0,4 N/cm, gemessen auf Stahl (siehe Prüfmethoden), beziehungsweise zwischen ca. 0,1 und 0,8 N/cm, bevorzugt zwischen 0,2 und 0,6 N/cm, gemessen auf der Ausleseseite des Speichermediums (siehe Prüfmethoden).

Als Polyisocyanate können alle bekannten mindestens difunktionellen Polyisocyanate verwendet werden. Darunter fallen sowohl alle aromatischen Typen wie zum Beispiel die Isomeren des Diphenylmethandiisocyanats (MDI), des Diphenyldimethylmethandiisocyanats, des Dibenzyldiisocyanats, des Phenylendiisocyanats, des Toluylendiisocyanats (TDI) oder des Naphthylendiisocyanats, als auch alle aliphatischen oder alicyclischen Typen, die insbesondere zur Herstellung lichtstabiler Polyurethane bevorzugt sind, wie zum Beispiel Butan-1,4-diisocyanat, Tetramethoxybutan-1,4-diisocyanat, Hexan-1,6-diisocyanat, Ethylendiisocyanat, Dicyclohexylmethandiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, Norbonandiisocyanatomethyl, weiterhin auch chlorierte, bromierte, schwefel- oder phosphorhaltige aromatische, aliphatische oder alicyclische Diisocyanate, sowie Derivate der aufgeführten Diisocyanate, insbesondere dimerisierte oder trimerisierte Typen, des weiteren Aromaten enthaltende Typen, in denen die Isocyanatgruppen selbst nicht aromatisch gebunden sind, wie zum Beispiel die Isomeren des Tetramethylxylylendiisocyanats (TMXDI) oder des Xylylendiisocyanats.

Aliphatische oder alicyclische Diisocyanate mit jeweils unsymmetrischer Molekülstruktur, in denen also die beiden Isocyanatgruppen jeweils eine unterschiedliche Reaktivität besitzen, sind besonders geeignet, um haftklebrige Polyurethane mit dem gewünschten Eigenschaftsprofil zu erzeugen, insbesondere im Hinblick auf eine weitestgehende Vermeidung von Haftklebstoffrückständen auf den Speichermedien.
Unsymmetrische Molekülstruktur bedeutet, dass das Molekül keine Symmetrieelemente (zum Beispiel Spiegelebenen, Symmetrieachsen, Symmetriezentren) besitzt, dass also keine Symmetrieoperation ausgeführt werden kann, die ein mit dem Ausgangsmolekül deckungsgleiches Molekül erzeugt.

Beispiele geeigneter Diisocyanate mit unsymmetrischer Molekülstruktur sind 2,2,4-Trimethyl-hexamethylendiisocyanat, Ethylethylendiisocyanat, 1 -Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethylcyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan oder 2-Heptyl-3,4-bis(9-isocyanatononyl)-1-pentyl-cyclohexan.
Besonders geeignet ist 1-Isocyanatomethyl-3-isocyanato-1,5,5-trimethylcyclohexan (Isophorondiisocyanat, IPDI).

Als gegenüber Isocyanaten reaktive Stoffe können alle für die Herstellung von Polyurethan-Haftklebstoffen bekannten Stoffe, bevorzugt Polyole, besonders bevorzugt Polyether-Polyole eingesetzt werden.

In Frage kommen beispielsweise alle Polyether-Polyole, wie zum Beispiel Polyethylenglykole, Polypropylenglykole, Polytetramethylenglykolether (Polytetrahydrofurane), Polyester-Polyole, Polycaprolatone, Polycarbonate, hydroxyl-funktionalisierte Polybutadiene oder andere Kohlenstoff-Kohlenstoff Doppelbindungen enthaltende Polyole, hydrierte Typen letztgenannter Beispiele, zum Beispiel hydrierte hydroxyl-funktionalisierte Polyisoprene, hydroxyl-funktionalisierte Polyisobutylene oder hydroxyl-funktionalisierte Polyolefine.

Weiterhin kommen auch alle Amino-Gruppen tragenden, in der Polyurethan-Chemie üblichen Polyether in Frage, da die daraus resultierenden Polyhamstoffe in der Polyurethan-Praxis zu den Polyurethanen hinzugerechnet werden (vgl. Kunststoff-Handbuch, Bd. 7, Polyurethane). Alle aufgezählten Stoffe können sowohl mit der Funktionalität 1,0 (Monoole), 2,0 (Diole), 3,0 (Triole), mit einer zwischen diesen Werten liegenden Funktionalität oder mit einer beliebigen anderen Funktionalität oder im Gemisch verwendet werden.

Neben den oben aufgezählten Isocyanat-Komponenten und den damit reagierenden Komponenten können aber auch andere Edukte zur Bildung des Polyurethans verwendet werden, ohne den Erfindungsgedanken zu verlassen.

Als Polypropylenglykole können alle handelsüblichen Polyether auf Basis von Propylenoxid und eines difunktionellen Starters im Falle der Diole und eines trifunktionellen Starters im Falle der Triole eingesetzt werden. Darunter fallen sowohl die konventionell, das heißt im Regelfall mit einem basischen Katalysator, wie zum Beispiel Kaliumhydroxid, hergestellten Polypropylenglykole, als auch die besonders reinen Polypropylenglykole, die DMC (Double metal cyanide)-katalysiert hergestellt werden, und deren Herstellung zum Beispiel in US 5,712,216 A, US 5,693,584 A, WO 99/56874 A1, WO 99/51661 A1, WO 99/59719 A1, WO 99/64152 A1, US 5,952,261 A1, WO 99/64493 A1 und WO 99/51657 A1 beschrieben wird. Charakteristisch an den DMC-katalysierten Polypropylenglykolen ist, dass die "nominale" beziehungsweise theoretische Funktionalität von exakt 2,0 im Falle der Diole beziehungsweise exakt 3,0 im Falle der Triole auch tatsächlich annähernd erreicht wird. Bei den konventionell hergestellten Polypropylenglykolen ist die "wahre" Funktionalität stets etwas geringer als die nominale, und zwar insbesondere bei Polypropylenglykolen mit höherem Molekulargewicht. Ursache ist unter anderem eine Umlagerungs-Nebenreaktion des Propylenoxids zum Allylalkohol.

Weiterhin können auch alle Polypropylenglykol-Diole beziehungsweise -Triole eingesetzt werden, in denen Ethylenoxid mit einpolymerisiert ist, was in vielen handelsüblichen Polypropylenglykolen der Fall ist, um eine erhöhte Reaktivität gegenüber Isocyanaten zu erzielen.

Durch Variation des Verhältnisses der Anzahl der Hydroxylgruppen des Diols zu der des Triols kann die Klebkraft anwendungsgerecht eingestellt werden. Überraschend wurde gefunden, dass die Klebkraft zunimmt, je höher das Verhältnis der Anzahl der Diol-OH-Gruppen zu der der Triol-OH-Gruppen ist.

Die Klebkraft kann weiterhin über das Verhältnis der Anzahl der Isocyanatgruppen zur Gesamtanzahl der Hydroxylgruppen eingestellt werden. Tendenziell nimmt die Klebkraft zu, je stärker dieses Verhältnis von 1 zu kleineren Werten hin abweicht.

In einer möglichen Ausführungsform enthält der polyurethan-basierte Haftklebstoff weitere Rezeptierungsbestandteile wie zum Beispiel Katalysatoren, Alterungsschutzmittel (primäre und sekundäre Antioxidantien), Lichtschutzmittel wie zum Beispiel UV-Absorber, rheologische Additive, Farbpigmente, Farbstoffe, sowie sonstige Hilfs- und Zusatzstoffe.

Bei der Auswahl dieser Stoffe ist im Hinblick auf eine rückstandsfreie Ablösbarkeit darauf zu achten, dass diese Stoffe keine Migrationstendenz zum zu verklebenden Substrat hin haben, damit es nicht auf diese Weise zu Rückständen oder auch zu Verfärbungen kommt. Aus dem gleichen Grund ist die Konzentration dieser Stoffe, insbesondere der flüssigen, in der Gesamtzusammensetzung möglichst niedrig zu halten. Die zusätzliche Verwendung von Weichmachern oder Klebrigmacherharzen sollte aus diesem Grund vermieden werden, ohne dass diese Stoffe damit gänzlich ausgeschlossen werden sollen.

Um die Reaktion zwischen der Isocyanat-Komponente und der mit dem Isocyanat reagierenden Komponente zu beschleunigen, können alle dem Fachmann bekannten Katalysatoren wie zum Beispiel tertiäre Amine, bismut- oder zinnorganische Verbindungen eingesetzt werden, um nur einige zu nennen.

Auch über die Auswahl des Katalysators sowie dessen Konzentration kann die Klebkraft mitbeeinflusst und anforderungsgerecht eingestellt werden. Tendenziell nimmt die Klebkraft mit zunehmender Katalysatoraktivität ab.

Die Verwendung von Antioxidantien ist vorteilhaft, aber nicht zwingend notwendig.

Zu den geeigneten Antioxidantien zählen zum Beispiel sterisch gehinderte Phenole, Hydrochinon-Derivate, sterisch gehinderte Amine, organische Schwefelverbindungen oder organische Phosphorverbindungen.

Lichtschutzmittel, zum Beispiel UV-Absorber können optional ebenso eingesetzt werden.

Als Lichtschutzmittel finden die bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.) 8, 21; 15, 529, 676 offenbarten Verwendung.

Beispiele für rheologische Additive sind pyrogene Kieselsäuren, Schichtsilikate (zum Beispiel Bentonite), hochmolekulare Polyamidpulver oder Rizinusölderivat-Pulver.

Zur Einfärbung des Haftklebstoffs kommen alle bekannten, in der Polyurethanchemie einsetzbaren Farbpigmente beziehungsweise Farbstoffe in Frage.

Der Haftklebstoff wird in einer bevorzugten Ausführungsform nach dem im folgenden beschriebenen Verfahren kontinuierlich hergestellt und bahnförmig aufgetragen:

Es werden in einem Behälter A im wesentlichen die vorgemischten, gegenüber Isocyanat reaktiven Stoffe ("Polyol-Komponente") und in einem Behälter B im wesentlichen die Isocyanat-Komponente vorgelegt, wobei gegebenenfalls die weiteren Rezeptierungsbestandteile diesen Komponenten bereits zuvor in einem üblichen Mischverfahren zugemischt wurden.

Die Polyol- und die Isocyanat-Komponente werden über Präzisionspumpen durch den Mischkopf oder das Mischrohr einer Mehrkomponenten-Misch- und Dosieranlage gefördert, dort homogen vermischt und somit zur Reaktion gebracht. Die somit gemischten, miteinander chemisch reagierenden Komponenten werden unmittelbar danach auf ein bahnförmiges Trägermaterial aufgebracht, das sich bevorzugt mit konstanter Geschwindigkeit bewegt. Die Art des bahnförmigen Trägermaterials richtet sich nach dem genauen Produktaufbau des beidseitig haftklebrigen Klebebandes sowie nach der Zweckmäßigkeit des Fertigungsprozesses. Es kann beispielsweise, insbesondere für den Fall eines zweischichtigen, trägerlosen Produktaufbaus, ein antiadhäsiv ausgerüstetes, bahnförmiges Material sein, das optional mit einem bekannten Haftklebstoff bereits vorbeschichtet vorliegt, wobei in dieser Option die gemischten, miteinander chemisch reagierenden, zunächst noch flüssigen Polyurethan-Komponenten direkt auf den bekannten Haftklebstoff beschichtet werden können.
Es kann, insbesondere für den Fall eines drei- oder mehrschichtigen Produktaufbaus mit integrierter Trägerschicht dieser Träger selbst sein, der optional mit dem bekannten Haftklebstoff von der entgegengesetzten Seite her bereits vorbeschichtet vorliegen kann. Der auf ein bahnförmiges Trägermaterial beschichtete Polyurethan-Haftklebstoff kann optional auch mit den weiteren zum Klebeband gehörenden Bausteinen in einem anschließenden Bearbeitungsschritt zusammenkaschiert werden.

Das mit der reagierenden Polyurethanmasse beschichtete Trägermaterial wird durch einen Wärmekanal geführt, in dem die Polyurethanmasse zum Haftklebstoff aushärtet. Das Auftragsgewicht der Polyurethanmasse ist frei wählbar. Es richtet sich nach den im Detail einzustellenden Produkteigenschaften, wobei die oben aufgeführten, typischen Produktdicken bevorzugt einzuhalten sind. Das beschichtete Trägermaterial wird abschließend in einer Wickelstation aufgewickelt.

Das beschriebene Verfahren ermöglicht es, lösemittel- und wasserfrei zu arbeiten. Das lösemittel- und wasserfreie Arbeiten ist die bevorzugte Verfahrensweise, ist aber nicht zwingend notwendig. Um zum Beispiel besonders geringe Auftragsgewichte zu erzielen, können die Komponenten in geeigneter Weise verdünnt werden. Um die Verankerung der Polyurethanmasse auf dem Trägermaterial beziehungsweise dem bekannten Haftklebstoff zu verbessern, können alle bekannten Methoden der Oberflächenvorbehandlung, wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschicht sowohl aus Lösungen oder Dispersionen heraus aufgetragen werden kann als auch im Extrusions- oder Coextrusionsverfahren.

Erfindungsgemäße Klebebänder weisen mit der stärker klebenden Seite Klebkräfte auf Stahl (siehe Prüfmethoden), ermittelt bei einem Abzugswinkel von 180° von größer ca. 1,0 N/cm, bevorzugt größer 2,0 N/cm, besonders bevorzugt größer 3,0 N/cm auf. Die stärker klebende Seite haftet auf den Oberflächen üblicher Gegenstände des täglichen Gebrauchs beziehungsweise an deren Verpackungen, wie zum Beispiel Dosen, Getränkedosen, Flaschen, Beutel, Tüten, Schachteln, Kartons oder Kisten usw. so gut, dass bei normalem Gebrauch keine oder zumindest keine vorzeitige, ungewollte Ablösung des Klebebandes von den Gebrauchsgegenständen oder deren Verpackung stattfindet.
Mit der schwächer klebenden, polyurethan-basierten Seite des Klebebandes werden typischerweise Klebkräfte auf Stahl (siehe Prüfmethoden), ermittelt bei einem Abzugswinkel von 180°, zwischen ca. 0,01 und 0,4 N/cm erreicht.
Die Klebkräfte dieser Seite auf der Ausleseseite des Speichermediums (siehe Prüfmethoden), ermittelt bei einem Abzugswinkel von 180°, liegen typischerweise zwischen ca. 0,1 und 0,8 N/cm, bevorzugt zwischen 0,2 und 0,6 N/cm.

Mit erfindungsgemäßen Klebebändem lassen sich flexible CDs, CD-ROMs oder andere Speichermedien der beschriebenen Art auf zylindrischen Körpern mit typischen Durchmessern von zumindest größer oder gleich ca. 5 cm über Zeiträume von mindestens 3 Monaten verkleben, ohne dass es von allein zu Ablösungen kommt, insbesondere auch nicht im Rand- beziehungsweise Kantenbereich der gebogenen und somit unter Spannung stehenden CDs beziehungsweise CD-ROMs.

Von Hand lassen sich die Speichermedien stets beschädigungsfrei von den erfindungsgemäßen Klebebändern ablösen. Überraschend wurde gefunden, dass der nach dem Ablösen der Speichermedien freigelegte Haftklebstoff trotz der sehr guten Klebeigenschaften auf Speichermedien weder an der Haut noch auf Papier klebt beziehungsweise sich nicht klebrig anfühlt. Die Speichermedien weisen nach dem Ablösen vom erfindungsgemäßen Klebeband keine oder zumindest keine visuell erkennbaren, die Qualität der Speichermedien beeinträchtigenden Rückstände, Flecken oder Deformationen auf.

Erfindungsgemäße, beidseitig haftklebrige Klebebänder mit unterschiedlich stark klebenden Seiten sind außer für das Verkleben sowie rückstands- und beschädigungsfreie Wiederablösen von biegsamen Speichermedien, wie zum Beispiel des CD-, CD-ROM- oder DVD-Typs auf gekrümmten, gebogenen oder geknickten Oberflächen auch für vielfältige andere Verwendungen geeignet. Beispielsweise lassen sich damit sowohl biegsame als auch nicht biegsame Speichermedien auf planen oder im wesentlichen planen Oberflächen, wie zum Beispiel in Büchern, Zeitschriften, Prospekten usw. verkleben. Weiterhin sind erfindungsgemäße Klebebänder geeignet zum rückstands- und beschädigungsfrei wiederablösbaren Verkleben von Kundenkarten, Kreditkarten oder ähnliches auf Anschreibebögen zum Versenden der Karten. Erfindungsgemäße Klebebänder sind allgemein für rückstands- und beschädigungsfrei wiederablösbare Fixierungen leichter Gegenstände, insbesondere mit Oberflächen aus Kunststoff, Metall oder Glas, geeignet.

Die folgenden Prüfmethoden wurden eingesetzt, um die nach den beschriebenen Verfahren hergestellten Muster kurz zu charakterisieren.
- Klebkraft (180° Abzugswinkel)
   Die Prüfung der Klebkraft erfolgt in Anlehnung an PSTC-101. Nach dieser Methode werden die erfindungsgemäßen Klebebänder mit einer Breite von 10 mm auf unterschiedlichen Haftgründen (Stahl, Ausleseseite einer flexiblen CD (hier ein modifizierter Epoxid-Schutzlack), Trägerseite einer flexiblen CD (hier PETP), Papier (hier handelsübliches Papier für Kopiergeräte)) aufgebracht und anschließend unter definierten Bedingungen mittels einer Zugprüfmaschine abgezogen.
   Der Abzugswinkel beträgt jeweils 180°, die Separationsgeschwindigkeit 300 mm/min. Angegeben wird der Mittelwert der Schälkraft in dem Bereich, in welchem das Klebeband zwischen 10 mm und 40 mm vom Haftgrund abgelöst ist. Die zum Abziehen erforderliche Kraft ist die Klebkraft, welche in der Einheit N/cm angegeben wird. Auf den angegeben Haftgründen wurde jeweils die schwächer klebende Seite des Klebebandes geprüft. Die stärker klebende Seite, deren Haftklebstoff bekannt ist, wurde nur auf Stahl geprüft.
   Der Stahlhaftgrund ist folgendermaßen spezifiziert:
   rostfreier Stahl, V2A (16/6), Werkstoff-Nr. 1.4301 nach DIN 17440, geschliffen, arithmetischer Mittenrauwert 0,05 bis 0,2 µm.
- Dauerklebfestigkeit auf zylindrischen Körpern
   Zur Bestimmung der Dauerklebfestigkeit und des Ablöseverhaltens auf gekrümmten Oberflächen werden erfindungsgemäße Klebebänder mit ihrer stärker klebenden Seite auf einen Stahlzylinder (Radius: 2,5 cm) geklebt. Sodann werden flexible CDs (Dicke: ca. 125 µm, Durchmesser: ca. 9,0 cm; Oberfläche 1 (Trägerschicht der CD): Polyester; Oberfläche 2 (Ausleseseite der CD): modifizierter Epoxidlack) sowohl mit der Ausleseseite als auch in einem zweiten Versuch mit der Trägerseite auf die schwächer klebende Seite des Klebebandes geklebt.
   Die Verklebungen werden nach 3 Monaten Lagerung bei Raumtemperatur (23 °C), bei + 50 °C sowie nach Temperaturwechsellagerung (4 Zyklen von jeweils 1 Woche bei - 10 °C, 1 Woche bei Raumtemperatur, 1 Woche bei + 50 °C) hinsichtlich des Ablösens der CDs vom Klebeband, insbesondere im Kantenbereich, beurteilt. Angegeben wird die radiale Ablösestrecke in der Einheit mm.
   Sodann werden die CDs bei Raumtemperatur von Hand gewollt abgelöst und visuell hinsichtlich vom Haftklebstoff herrührender Rückstände (zum Beispiel Schatten, Beläge, Flecken) sowie hinsichtlich Deformationen oder Beschädigungen untersucht und bewertet. Anschließend wird die Auslesbarkeit der Daten geprüft.
   Die Haftung der nach dem Ablösen der CDs nunmehr offengelegten Haftklebeschicht auf der Haut wird sensorisch ermittelt

Im folgenden soll die Erfindung anhand von Beispielen erläutert werden, ohne diese damit allerdings einschränken zu wollen.

### Beispiele

Die folgenden Trägerfolien beziehungsweise -materialien werden in den Beispielen eingesetzt:
- handelsübliche Polyesterfolie (PETP)
   Dicke: 12 µm, Breite: 50 cm, Hersteller: Mitsubishi
- handelsübliche BOPP-Folie
   Dicke: 28 µm, Breite: 50 cm, Hersteller: Radici
- Silikonrohpapier AV 100 NF
   Dicke: 70 µm, Breite: 50 cm, Hersteller: Ahlstrom
- Extrudat aus Elvax 310 ® (Elastomer auf Basis EVA, Hersteller: Du Pont)
   Dicke des Extrudats: 50 µm, Breite: 50 cm.

Folgende bekannte Haftklebstoffe werden für die stärker klebende Seite des erfindungsgemäßen Klebebandes in den Beispielen eingesetzt:

### Bekannter Haftklebstoff 1:

### (Acrylatcopolymer-basierterTyp)

Ein für radikalische Polymerisationen konventioneller 2 I-Reaktor wird mit
20 g Hydroxypropylacrylat
60 g Methylacrylat
210 g Ethylhexylacrylat
210 g Butylacrylat
300 g Aceton / Siedegrenzbenzin 60/95 (1 : 1 )
befüllt. Nach 45 Minuten Durchleiten von Stickstoffgas unter Rühren werden der Reaktor auf 58 °C hochgeheizt und 0,2 g Azoisobutyronitril (AIBN) hinzugegeben. Anschließend wird das äußere Heizbad auf 75 °C erwärmt und die Reaktion konstant bei dieser Temperatur durchgeführt.

Nach 1 h Reaktionszeit werden wiederum 0,2 g AIBN hinzugegeben.

Nach 2,5 h und 5 h wird mit jeweils 150 g Aceton/Siedegrenzenbenzin 60/95 (1:1) verdünnt.
Die Reaktion wird nach 48 h Reaktionszeit abgebrochen und auf Raumtemperatur abgekühlt.
Schließlich werden noch, bezogen auf die obigen Mengenverhältnisse, 2,5 g Desmodur Z@ zugegeben. Der Haftklebstoff liegt somit beschichtungsbereit vor.

### Bekannter Haftklebstoff 2:

### (Naturkautschuk-basierter Typ)

Es wird ein nach üblichen, bekannten Methoden in einem Kneter hergestellter Haftklebstoff der folgenden Zusammensetzung eingesetzt:

| Gewichtsanteil (Gew.-%) | Handelsname | Chemische Basis | Hersteller / Lieferant |
|---|---|---|---|
| 46,0 | Naturkautschuk SMR CV50® | Naturkautschuk | Weber & Schaer |
| 26,0 | Zonarez B 115 S® | Poly-Pinenharz | Arizona |
| 10,0 | Dertophene T 110® | Terpenphenolharz | DRT |
| 7,0 | Resin 731 D® | Kolophoniumharz | Abieta |
| 7,0 | Nipol 1312 LV® | Acrylnitril-Butadien-Copolymer | Zeon |
| 3,0 | Zinkoxid Weißsiegel® | Zinkoxid | Grillo |
| 1,0 | Irganox 1010® | sterisch gehindertes Phenol | Ciba-Geigy |

Der Haftklebstoff wird in einer Konzentration von 20 % in Benzin/Ethanol (100:5) hergestellt und eingesetzt.

Bekannter Haftklebstoff 3:

### (Styrolblockcopolymer-basierter Typ)

Es wird ein nach üblichen, bekannten Methoden in einem Kneter hergestellter Haftklebstoff der folgenden Zusammensetzung lösemittelfrei eingesetzt:

| Gewichtsanteil (Gew.-%) | Handelsname | Chemische Basis | Hersteller / Lieferant |
|---|---|---|---|
| 45,0 | Vector 4113® | Styrol-Isopren-Styrol Blockcopolymer | Exxon Mobil |
| 45,0 | Escorez 2203® | Aromatmodifiziertes C-5 - Kohlenwasserstoffharz | Exxon Mobil |
| 9,0 | Ondina G41® | Weißöl | Shell Chemicals |
| 1,0 | Irganox 1010® | sterisch gehindertes Phenol | Ciba-Geigy |

Folgende Rohstoffe werden zur Herstellung der Polyurethan-Haftklebstoffe für die schwächer klebende Seite erfindungsgemäßer Klebebänder in den Beispielen verwendet. Die genannten Rohstoffe sind alle frei im Handel erhältlich.

| | | |
|---|---|---|
| Handelsname | Chemische Basis Mittlere Molmasse OH- beziehungsweise NCO-Zahl | Hersteller / Lieferant |
| Desmophen 1262 BD ® | Polypropylenglykol, Diol (M=430) (4661 mmol OH / kg) | Bayer |
| Acclaim 4220 N ® | Polypropylenglykol, Diol, hochrein, DMC-katalysiert hergestellt (M=4000) (500 mmol OH / kg) | Bayer |
| Desmophen 1380 BT ® | Polypropylenglykol, Triol (M=450) (6774 mmol OH / kg) | Bayer |
| Acclaim 6320 N ® | Polypropylenglykol, Triol, hochrein, DMC-katalysiert hergestellt (M=6000) (500 mmol OH / kg) | Bayer |
| Vestanat IPDI ® | Isophorondiisocyanat (M= 222,3) (8998 mmol NCO / kg) | Degussa-Hüls |
| Desmodur W ® | Dicyclohexylmethandiisocyanat (M= 262) (7571 mmol NCO / kg) | Bayer |
| Mark DBTL ® | Dibutylzinndilaurat | Nordmann, Rassmann |
| | Bismuttrisneodecanoat CAS-Nr. 34364-26-6 | |
| Tinuvin 292 ® | sterisch gehindert. Amin, Lichtschutzmittel | Ciba |
| Tinuvin 400 ® | Triazin-Derivat, UV-Schutzmittel | Ciba |

Die Polyurethan-Beschichtungen erfolgten in den Beispielen auf einer üblichen Laborbeschichtungsanlage für kontinuierliche Beschichtungen. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120 °C frei wählbar.

Es wurde eine übliche Mehrkomponenten-Misch- und Dosieranlage mit einem dynamischen Mischsystem verwendet. Der Mischkopf war für zwei flüssige Komponenten konzipiert. Der Mischrotor hatte eine variable Drehzahl bis max. ca. 5000 U/min. Bei den Dosierpumpen dieser Anlage handelte es sich um Zahnradpumpen mit einer Förderleistung von max. ca. 2 I/min.

Die Polyol-Komponenten beziehungsweise die Komponenten mit den gegenüber Isocyanaten reaktiven Stoffen wurden in einem üblichen beheiz- und evakuierbaren Mischkessel gefertigt. Während des jeweils ca. zweistündigen Mischvorgangs wurde die Temperatur der Mischung auf ca. 70 °C eingestellt und zur Entgasung der Komponenten wurde Vakuum angelegt.

### Beispiele 1 bis 3

Die PETP-Trägerfolie wird zunächst in üblichen Verfahren mit den bekannten Haftklebstoffen 1 (Beispiel 1), 2 (Beispiel 2) und 3 (Beispiel 3) beschichtet und nach dem Abdampfen des jeweiligen Lösemittels (Beispiele 1 und 2) im Wärmekanal unter Zukaschierung von üblichem silikonisiertem Trennpapier aufgerollt. Die Auftragsstärke beträgt jeweils 30 g/m².
Sodann wird die somit vorbeschichtete PETP-Folie von der entgegengesetzten Seite mit einem Polyurethan-Haftklebstoff folgender Zusammensetzung im oben beschriebenen Verfahren in einer Auftragsstärke von 30 g/m² beschichtet:

| | | | |
|---|---|---|---|
| NCO / OH - Verhältnis: 1,05 | | | |
| Verhältnis Anzahl Diol-OH / Anzahl Triol-OH: 2,3 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 17,1 | 79,7 mmol OH |
| | Acclaim 6320N ® | 68,3 | 34,2 mmol OH |
| | Bismuttrisneodecanoat | 1,0 | |
| | Tinuvin 292 ® | 0,1 | |
| | Tinuvin 400 ® | 0,2 | |
| B-Komponente | Vestanat IPDI ® | 13,3 | 119,7 mmol NCO |

| Charakterisierende Prüfergebnisse: | |
|---|---|
| stärker klebende Seite (bekannter Haftklebstoff) | |
| Klebkraft auf Stahl | > 3,0 N/cm |
| | |
| schwächer klebende Seite (Polyurethan-Haftklebstoff) | |
| Klebkraft auf Stahl | 0,1 N/cm |
| Klebkraft auf der Ausleseseite der CD | 0,4 N/cm |
| Klebkraft auf der Trägerseite der CD | 0,2 N/cm |
| Klebkraft auf Papier | < 0,1 N/cm |
| | |
| Dauerklebfestigkeit auf zylindrischen Körpern | |
| nach 3 Monaten Lagerung bei Raumtemperatur | Ablösestrecke < 1 mm |
| nach 3 Monaten Lagerung bei + 50 °C | Ablösestrecke < 1 mm |
| nach 3 Monaten Temperaturwechsellagerung | Ablösestrecke < 1 mm |
| Rückständen, Deformationen, Beschädigungen | visuell nicht erkennbar |
| Auslesbarkeit der Daten | gegeben |
| Haftung auf der Haut | keine Haftung |

### Beispiele 4 bis 6

Die BOPP-Trägerfolie wird zunächst beidseitig Corona-vorbehandelt und sodann in üblichen Verfahren mit den bekannten Haftklebstoffen 1 (Beispiel 4), 2 (Beispiel 5) und 3 (Beispiel 6) beschichtet und nach dem Abdampfen des jeweiligen Lösemittels (Beispiele 4 und 5) im Wärmekanal unter Zukaschierung von üblichem silikonisiertem Trennpapier aufgerollt. Die Auftragsstärke beträgt jeweils 30 g/m².
Sodann wird die somit vorbeschichtete BOPP-Folie von der entgegengesetzten Seite mit einem Polyurethan-Haftklebstoff folgender Zusammensetzung im oben beschriebenen Verfahren in einer Auftragsstärke von 30 g/m² beschichtet:

| | | | |
|---|---|---|---|
| NCO / OH - Verhältnis: 1,02 | | | |
| Verhältnis Anzahl Diol-OH / Anzahl Triol-OH: 1,3 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 10,8 | 50,7 mmol OH |
| | Acclaim 6320N ® | 78,0 | 39,0 mmol OH |
| | Bismuttrisneodecanoat | 1,0 | |
| B-Komponente | Vestanat IPDI ® | 10,2 | 91,4 mmol NCO |

| Charakterisierende Prüfergebnisse: | |
|---|---|
| stärker klebende Seite (bekannter Haftklebstoff) | |
| Klebkraft auf Stahl | > 3,0 N/cm |
| | |
| schwächer klebende Seite (Polyurethan-Haftklebstoff) | |
| Klebkraft auf Stahl | 0,2 N/cm |
| Klebkraft auf der Ausleseseite der CD | 0,3 N/cm |
| Klebkraft auf der Trägerseite der CD | 0,2 N/cm |
| Klebkraft auf Papier | < 0,1 N/cm |
| | |
| Dauerklebfestigkeit auf zylindrischen Körpern | |
| nach 3 Monaten Lagerung bei Raumtemperatur | Ablösestrecke < 1 mm |
| nach 3 Monaten Lagerung bei + 50 °C | Ablösestrecke < 1 mm |
| nach 3 Monaten Temperaturwechsellagerung | Ablösestrecke < 1 mm |
| Rückständen, Deformationen, Beschädigungen | visuell nicht erkennbar |
| Auslesbarkeit der Daten | gegeben |
| Haftung auf der Haut | keine Haftung |

### Beispiele 7 bis 9

Das Silikonrohpapier (das heißt Papier ohne Silikonbeschichtung) wird in üblichen Verfahren mit den bekannten Haftklebstoffen 1 (Beispiel 7), 2 (Beispiel 8) und 3 (Beispiel 9) beschichtet und nach dem Abdampfen des jeweiligen Lösemittels (Beispiele 7 und 8) im Wärmekanal unter Zukaschierung von üblichem silikonisiertem Trennpapier aufgerollt. Die Auftragsstärke beträgt jeweils 50 g/m².
Sodann wird das somit vorbeschichtete Papier von der entgegengesetzten Seite mit einem Polyurethan-Haftklebstoff folgender Zusammensetzung im oben beschriebenen Verfahren in einer Auftragsstärke von 30 g/m² beschichtet:

| | | | |
|---|---|---|---|
| NCO / OH - Verhältnis: 1,0 | | | |
| Verhältnis Anzahl Diol-OH / Anzahl Triol-OH: 0,2 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Acclaim 4220 N ® | 58,0 | 29,0 mmol OH |
| | Desmophen 1380 BT ® | 21,5 | 145,2 mmol OH |
| | Mark DBTL ® | 1,0 | |
| B-Komponente | Vestanat IPDI ® | 19,5 | 174,2 mmol NCO |

| Charakterisierende Prüfergebnisse: | |
|---|---|
| stärker klebende Seite (bekannter Haftklebstoff) | |
| Klebkraft auf Stahl | > 3,0 N/cm |
| | |
| schwächer klebende Seite (Polyurethan-Haftklebstoff) | |
| Klebkraft auf Stahl | 0,2 N/cm |
| Klebkraft auf der Ausleseseite der CD | 0,4 N/cm |
| Klebkraft auf der Trägerseite der CD | 0,3 N/cm |
| Klebkraft auf Papier | < 0,1 N/cm |
| | |
| Dauerklebfestigkeit auf zylindrischen Körpern | |
| nach 3 Monaten Lagerung bei Raumtemperatur | Ablösestrecke < 1 mm |
| nach 3 Monaten Lagerung bei + 50 °C | Ablösestrecke < 1 mm |
| nach 3 Monaten Temperaturwechsellagerung | Ablösestrecke < 1 mm |
| Rückständen, Deformationen, Beschädigungen | visuell nicht erkennbar |
| Auslesbarkeit der Daten | gegeben |
| Haftung auf der Haut | keine Haftung |

### Beispiele 10 bis 12

Das elastische, auf einem üblichen silikonisierten Trennpapier vorliegende Elvax 310-Extrudat wird in üblichen Verfahren mit den bekannten Haftklebstoffen 1 (Beispiel 10), 2 (Beispiel 11) und 3 (Beispiel 12) beschichtet und nach dem Abdampfen des jeweiligen Lösemittels (Beispiele 10 und 11) im Wärmekanal unter Zukaschierung von üblichem silikonisiertem Trennpapier aufgerollt. Die Auftragsstärke beträgt jeweils 50 g/m².
Sodann wird das somit vorbeschichtete Extrudat von der entgegengesetzten Seite mit einem Polyurethan-Haftklebstoff folgender Zusammensetzung im oben beschriebenen Verfahren in einer Auftragsstärke von 30 g/m² beschichtet:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 12,0 | 56,0 mmol OH |
| | Acclaim 6320 N ® | 74,7 | 37,3 mmol OH |
| | Mark DBTL ® | 1,0 | |
| B-Komponente | Desmodur W ® | 12,3 | 93,3 mmol NCO |

| Charakterisierende Prüfergebnisse: | |
|---|---|
| stärker klebende Seite (bekannter Haftklebstoff) | |
| Klebkraft auf Stahl | > 3,0 N/cm |
| | |
| schwächer klebende Seite (Polyurethan-Haftklebstoff) | |
| Klebkraft auf Stahl | 0,1 N/cm |
| Klebkraft auf der Ausleseseite der CD | 0,2 N/cm |
| Klebkraft auf der Trägerseite der CD | 0,1 N/cm |
| Klebkraft auf Papier | < 0,1 N/cm |
| | |
| Dauerklebfestigkeit auf zylindrischen Körpern | |
| nach 3 Monaten Lagerung bei Raumtemperatur | Ablösestrecke < 1 mm |
| nach 3 Monaten Lagerung bei + 50 °C | Ablösestrecke < 1 mm |
| nach 3 Monaten Temperaturwechsellagerung | Ablösestrecke < 1 mm |
| Rückständen, Deformationen, Beschädigungen | visuell nicht erkennbar |
| Auslesbarkeit der Daten | gegeben |
| Haftung auf der Haut | keine Haftung |

### Beispiel 13 bis 15

Ein übliches, beidseitig silikonisiertes Trennpapier wird zunächst in üblichen Verfahren mit den bekannten Haftklebstoffen 1 (Beispiel 1), 2 (Beispiel 2) und 3 (Beispiel 3) beschichtet und nach dem Abdampfen des jeweiligen Lösemittels (Beispiele 13 und 14) im Wärmekanal aufgerollt. Die Auftragsstärke beträgt jeweils 50 g/m².
Sodann wird direkt auf die somit beschichtet vorliegenden bekannten Haftklebstoffe jeweils ein Polyurethan-Haftklebstoff folgender Zusammensetzung im oben beschriebenen Verfahren in einer Auftragsstärke von 30 g/m² beschichtet:

| | | | |
|---|---|---|---|
| NCO / OH - Verhältnis: 1,05 | | | |
| Verhältnis Anzahl Diol-OH / Anzahl Triol-OH: 2,3 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 17,1 | 79,7 mmol OH |
| | Acclaim 6320N ® | 68,3 | 34,2 mmol OH |
| | Bismuttrisneodecanoat | 1,0 | |
| | Tinuvin 292 ® | 0,1 | |
| | Tinuvin 400 ® | 0,2 | |
| B-Komponente | Vestanat IPDI ® | 13,3 | 119,7 mmol NCO |

| Charakterisierende Prüfergebnisse: | |
|---|---|
| stärker klebende Seite (bekannter Haftklebstoff) | |
| Klebkraft auf Stahl | > 3,0 N/cm |
| | |
| schwächer klebende Seite (Polyurethan-Haftklebstoff) | |
| Klebkraft auf Stahl | 0,2 N/cm |
| Klebkraft auf der Ausleseseite der CD | 0,5 N/cm |
| Klebkraft auf der Trägerseite der CD | 0,3 N/cm |
| Klebkraft auf Papier | < 0,1 N/cm |
| | |
| Dauerklebfestigkeit auf zylindrischen Körpern | |
| nach 3 Monaten Lagerung bei Raumtemperatur | Ablösestrecke < 1 mm |
| nach 3 Monaten Lagerung bei + 50 °C | Ablösestrecke < 1 mm |
| nach 3 Monaten Temperaturwechsellagerung | Ablösestrecke < 1 mm |
| Rückständen, Deformationen, Beschädigungen | visuell nicht erkennbar |
| Auslesbarkeit der Daten | gegeben |
| Haftung auf der Haut | keine Haftung |

## Patentansprüche

1. Beidseitig haftklebriges Klebeband mit unterschiedlich stark klebenden Seiten, enthaltend zumindest eine Klebstoffschicht,
**dadurch gekennzeichnet, dass**
der Haftklebstoff der Klebstoffschicht auf einem chemisch vemetzten Polyurethan basiert, wobei die Ausgangsstoffe des chemisch vernetzten Polyurethans mindestens ein Polypropylenglykol mit einer Molmasse von größer 1000 und einer Funktionalität größer 2,0 enthalten, und zwar zu einem Anteil von mindestens 50 Gew.-% bezogen auf die Gesamtmenge der gegenüber Isocyanaten reaktiven Stoffe, wobei mindestens 80 % der weiteren gegenüber Isocyanaten reaktiven Ausgangsstoffe des chemisch vemetzten Polyurethans eine Molmasse von kleiner oder gleich 1000 und eine nominale Funktionalität von 2,0 haben und wobei sich die Zusammensetzung der Ausgangsstoffe des chemisch vernetzten Polyurethans dadurch auszeichnet, dass das Verhältnis der Anzahl der Isocyanat-Gruppen zur Gesamtanzahl der gegenüber Isocyanaten reaktiven Gruppen zwischen 0,8 und 1,2, bevorzugt zwischen 0,9 und 1,1, besonders bevorzugt zwischen 0,95 und 1,05 liegt.

2. Beidseitig haftklebriges Klebeband nach Anspruch 1,
**dadurch gekennzeichnet, dass**
die Ausgangsstoffe des chemisch vernetzten Polyurethans mindestens ein Polypropylenglykol mit einer Molmasse von größer 1000 und einer Funktionalität größer 2,0 enthalten, und zwar zu einem Anteil von mindestens 60 Gew.-%, bevorzugt mindestens 70 Gew.-%, bezogen auf die Gesamtmenge der gegenüber Isocyanaten reaktiven Stoffe.

3. Beidseitig haftklebriges Klebeband mit unterschiedlich stark klebenden Seiten, enthaltend zumindest eine Klebstoffschicht,
**dadurch gekennzeichnet, dass**
der Haftklebstoff der Klebstoffschicht auf einem chemisch vemetzten Polyurethan basiert, wobei die Ausgangsstoffe des chemisch vernetzten Polyurethans mindestens ein Polypropylenglykol mit einer Molmasse von kleiner oder gleich 1000 und einer Funktionalität größer 2,0 enthalten, dessen Hydroxylgruppen einen Anteil von mindestens 50 % bezogen auf die Gesamtanzahl der gegenüber Isocyanaten reaktiven Gruppen haben, wobei mindestens 80 % der weiteren gegenüber Isocyanaten reaktiven Gruppen der Ausgangsstoffe des chemisch vemetzten Polyurethans von Ausgangsstoffen mit einer Molmasse von größer 1000 und einer nominalen Funktionalität von 2,0 getragen werden und wobei sich die Zusammensetzung der Ausgangsstoffe des chemisch vernetzten Polyurethans dadurch auszeichnet, dass das Verhältnis der Anzahl der Isocyanat-Gruppen zur Gesamtanzahl der gegenüber Isocyanaten reaktiven Gruppen zwischen 0,8 und 1,2, bevorzugt zwischen 0,9 und 1,1, besonders bevorzugt zwischen 0,95 und 1,05 liegt.

4. Beidseitig haftklebriges Klebeband nach Anspruch 3,
**dadurch gekennzeichnet, dass**
die Ausgangsstoffe des chemisch vernetzten Polyurethans mindestens ein Polypropylenglykol mit einer Molmasse von kleiner oder gleich 1000 und einer Funktionalität von größer 2,0 enthalten, dessen Hydroxylgruppen einen Anteil von mindestens 60 %, bevorzugt mindestens 70 % der Gesamtanzahl der gegenüber Isocyanaten reaktiven Gruppen haben.

5. Beidseitig haftklebriges Klebeband nach zumindest einem der vorherigen Ansprüche,
**dadurch gekennzeichnet, dass**
das Klebeband aus zwei Klebstoffschichten besteht, von denen zumindest eine aus dem polyurethan-basierten Haftklebstoff gebildet wird und die eine geringere Klebkraft als die andere aufweist.

6. Beidseitig haftklebriges Klebeband nach zumindest einem der vorherigen Ansprüche,
**dadurch gekennzeichnet, dass**
das Klebeband aus drei oder mehr Schichten besteht, wobei auf einer Trägerschicht gegenüberliegend zwei Klebstoffschichten aufgebracht werden, von denen zumindest eine aus dem polyurethan-basierten Haftklebstoff gebildet wird.

7. Beidseitig haftklebriges Klebeband nach zumindest einem der vorherigen Ansprüche,
**dadurch gekennzeichnet, dass**
das Polyisocyanat, das zur Bildung des Haftklebstoffes eingesetzt wird, ein aliphatisches oder alicyclisches Diisocyanat ist, bevorzugt ein aliphatisches oder alicyclisches Diisocyanat mit unsymmetrischer Molekülstruktur, besonders bevorzugt isophorondiisocyanat (IPDI).

8. Beidseitig haftklebriges Klebeband nach zumindest einem der vorherigen Ansprüche,
**dadurch gekennzeichnet, dass**
zur Bildung des Haftklebstoffes als gegenüber Isocyanaten reaktive Stoffe Polyole, wie Polyether-Polyole oder Polyester-Polyole, eingesetzt werden..

9. Beidseitig haftklebriges Klebeband nach zumindest einem der vorherigen Ansprüche,
**dadurch gekennzeichnet, dass**
das Klebeband in Form von Stanzlingen oder geschnittenen Formteilen vorliegt.

10. Verfahren zur Herstellung eines Klebebands nach zumindest einem der vorherigen Ansprüche, wobei
a) in einem Behälter A im wesentlichen die vorgemischten, gegenüber Isocyanat reaktiven Stoffe (Polyol-Komponente) und in einem Behälter B im wesentlichen die Isocyanat-Komponente vorgelegt werden, wobei gegebenenfalls die weiteren Rezeptierungsbestandteile diesen Komponenten bereits zuvor in einem üblichen Mischverfahren zugemischt wurden,
b) die Polyol- und die Isocyanat-Komponente über Präzisionspumpen durch den Mischkopf oder das Mischrohr einer Mehrkomponenten-Misch- und Dosieranlage gefördert, dort homogen vermischt und somit zur Reaktion gebracht werden,
c) die somit gemischten, miteinander chemisch reagierenden Komponenten unmittelbar danach auf ein bahnförmiges, mit einer zweiten Haftklebstoffschicht versehenes Trägermaterial aufgebracht werden, das sich bevorzugt mit konstanter Geschwindigkeit bewegt,
d) das mit der reagierenden Polyurethanmasse beschichtete Trägermaterial durch einen Wärmekanal geführt wird, in dem die Polyurethanmasse zum Haftklebstoff aushärtet,
e) das beschichtete Trägermaterial abschließend in einer Wickelstation aufgewickelt wird.

11. Verwendung eines beidseitig haftklebrigen Klebebandes nach zumindest einem der vorherigen Ansprüche für das Verkleben sowie rückstands- und beschädigungsfreie Wiederablösen von biegsamen Speichermedien wie zum Beispiel des CD-, CD-ROModer DVD-Typs auf gekrümmten, gebogenen oder geknickten Oberflächen.

12. Verwendung eines beidseitig haftklebrigen Klebebandes nach zumindest einem der vorherigen Ansprüche für das Verkleben sowie rückstands- und beschädigungsfreie Wiederablösen von Kundenkarten, Kreditkarten auf Anschreibebögen zum Versenden der Karten.
